# EUROPEAN PATENT APPLICATION

(11) **EP 3 086 550 A1**
(43) Date of publication of application: **26.10.2016**
(21) Application number: 14872486.7
(22) Date of filing: 12.12.2014
(51) Int. Cl.: H04N 7/18, G06F 13/00, H04N 5/225, H04N 5/765, H04N 5/91, H04N 5/92, H04N 21/274, H04N 21/437

(54) **CAMERA TERMINAL DEVICE, THIN CLIENT SERVER DEVICE, CAMERA SYSTEM, AND CONTROL METHOD**

(30) Priority: 18.12.2013 JP 2013260706
(71) Applicant: NEC Corporation, Tokyo 108-8001 (JP)
(72) Inventor: MIZUNO, Daisuke, Tokyo 108-8001 (JP)
(74) Representative: Betten & Resch
(86) International application number: PCT/JP2014/006205
(87) International publication number: WO 2015/093020

(57) **Abstract**

In order to reduce a possibility that it is not straightforward to preview data of a photograph taken on a camera terminal and the data of a photograph taken be leaked due to loss of the camera terminal or the like, a terminal control means for transmitting data of a photograph with a prescribed identifier or a photograph display request signal with the prescribed identifier in recognizable state, and a display means for displaying photograph data are provided.

## Description

### [Technical Field]

The present invention relates to a camera terminal device, a thin-client server device, a camera system, and a control method for the same.

### [Background Art]

Historically, thin-client solutions have been used to allow utilizing of application programs or data on a virtual terminal provided in a cloud by connecting a terminal such as a smartphone, a tablet or the like to the virtual terminal. This thin-client solution is intended to reduce security risks such as information leakage and the like caused by loss of the terminal and ensure safe and secure use of the terminal.

A thin-client system, by storing data in a virtual terminal on a server, instead of a client terminal, reduces security risks such as information leakage and the like caused by loss of the client terminal.

Most smart devices used as the client terminals include camera functions. As one of the camera functions of the smart device, there is a function for transmitting the data of a photograph taken to the server over a network. In some cases, however, the smart device may have to use an application program different from one that transmitted photograph data to display the photograph in order to view the photograph whose data was transmitted to the server on the smart device. Therefore, there is such a problem that it may not be possible to immediately preview the photograph transmitted to the server on the smart device or that the photograph on the server may be viewed only with a personal computer. Further, the photograph transmission function described above has a security problem of possible photograph data leakage due to loss of the smart device or the like because the photograph transmission function stores the data of a photograph taken with the smart device once in the smart device.

Techniques related to resolution to such problems are described in PTL 1 to PTL 4.

The techniques described in PTL 1 are as follows.

In an image communication system including an image processing device that transmits and receives an electronic mail including image data between mobile communication terminals, the mobile communication terminal includes an image capturing means for capturing image data and a transmission means for transmitting an electronic mail including the captured image data to a specified destination. The mobile communication terminal further includes a receiving means for receiving an electronic mail transmitted from the image processing device and a display control means for displaying image data included in the received electronic mail on a display device. The image processing device includes a receiving means for receiving the electronic mail transmitted from the mobile communication terminal, a data separating means for separating the received electronic mail into image data and text data, and an image processing means for applying predetermined image processing to the separated image data. The image processing device further includes a transmission means for transmitting a reply electronic mail including the image data to which the image processing is already applied to the mobile communication terminal.

In short, the image data transmitted via the electronic mail from the mobile communication terminal and then received at the image processing device is processed and then transmitted to the mobile communication terminal via the electronic mail.

The techniques described in PTL 2 are as follows.

A camera system includes a first media-less camera that serves as an authentication server, a second media-less camera that serves as a client, and a file server. The first media-less camera performs authentication on behalf of the file server when the second media-less camera logs in to the file server. The second media-less camera, which has been successfully authenticated, performs transfer of photographing data directly to the file server.

The techniques described in PTL 3 are as follows.

A camera-equipped information search device includes a means for transmitting a camera image and additional information including position information detected by a position detection means, direction information detected by a direction detection means, and lens focal length information and photographing magnification ratio information of the camera to a server. The camera-equipped information search device includes a means for requesting a search for one or more targets within the photographing range of a camera image. The camera-equipped information search device includes means for receiving a search result concerning a target within the photographing range of the camera, which is detected based on the additional information or a target detected from information in a camera image from the server. The camera-equipped information search device includes means for processing the received search result and displaying a search screen for each target on the display screen of a display unit. The search screen is configured to display, for each target, selection information corresponding to the target and to allow acquiring detailed information about the corresponding target by selecting the selection information.

The techniques described in PTL 4 are as follows.

A surveillance camera terminal includes an encryption means for encrypting a photographed image by the encryption key unique to the terminal, an image data storage unit that stores the image data encrypted by the encryption means, and a wireless communication means for wirelessly communicating with another surveillance camera terminal. The wireless communication means transmits image data encrypted by the encryption means to the other surveillance camera terminal and receives image data photographed and encrypted by the other surveillance camera terminal. The image data storage unit stores the encrypted image data which the wireless communication means has received from the other surveillance camera terminal.

### [Citation List]

### [Patent Literature]

[PTL 1] Japanese Patent Application Laid-open Publication No. 2002-197038
[PTL 2] Japanese Patent Application Laid-open Publication No. 2008-042631
[PTL 3] Japanese Patent Application Laid-open Publication No. 2008-250474
[PTL 4] Japanese Patent Application Laid-open Publication No. 2008-294805

### [Summary of Invention]

### [Technical Problem]

In the techniques described in PTL 1, the image data may be leaked due to loss of the mobile communication terminal or the like because the image data is transmitted from the image processing device, then received at the mobile communication terminal, and thus exists in the mobile communication terminal.

In the techniques described in PTL 2, the photograph data needs to be retrieved and stored into the mobile terminal in order to display the photograph data on the mobile terminal, because the photograph data is transferred from the media-less camera to the file server and thus exists in the file server. It is therefore not straightforward to display (preview) the photograph data on the mobile terminal, and the image data may be leaked due to loss of the mobile terminal or the like.

In the techniques described in PTL 3, because the camera image is transmitted from the camera-equipped information search device to the server and thus exists in the server, the camera image needs to be retrieved and stored into the camera-equipped information search terminal in order to display the camera image on the camera-equipped information search device. It is therefore not straightforward to display the camera image on the camera-equipped information search terminal, and the camera image may be leaked due to loss of the camera-equipped information search device or the like.

In the techniques described in PTL 4, the image data is encrypted in the surveillance camera terminal, then transmitted to another surveillance camera terminal, and thus exists in the other surveillance camera. Therefore, in order to display the image data on the surveillance camera terminal which has transmitted the image data, the camera image needs to be retrieved and stored into the surveillance camera terminal and decrypted. It is therefore not straightforward to display the image data on the surveillance camera terminal and the camera image may be leaked due to theft of the surveillance camera terminal or the like.

In short, there are problems that it is not straightforward to display the data of a photograph taken on the camera terminal and that the data of a photograph taken may be leaked due to loss of the camera terminal or the like.

An object of the present invention is to provide a camera terminal device, a thin-client server device, a camera system, and a control method for the same that resolve such problems.

### [Solution to Problem]

A camera terminal device according to the present invention includes a terminal control means for transmitting data of a photograph with a prescribed identifier or a photograph display request signal with the prescribed identifier in recognizable state, the photograph being taken with its own camera terminal device, the signal being input, and a display means for displaying photograph data received in response to the photograph display request signal without storing in the device.

A control method for a camera terminal device according to the present invention includes transmitting data of a photograph with a prescribed identifier or a photograph display request signal with the prescribed identifier in recognizable state, the photograph being taken, the signal being input, and displaying photograph data received in response to the photograph display request signal without storing.[Advantageous Effects of Invention]

According to the present invention, it is capable of straightforwardly displaying the data of a photograph taken on the camera terminal and reducing a possibility that the data of a photograph taken be leaked due to loss of the camera terminal or the like.

### [Brief Description of Drawings]

Fig. 1 is a diagram illustrating an exemplary configuration of a camera system according to a first exemplary embodiment of the present invention.
Fig. 2 is a table illustrating a conceptual example of a database in the first exemplary embodiment of the present invention.
Fig. 3 is a flowchart illustrating an operation of the camera system according to the first exemplary embodiment.
Fig. 4 is a diagram illustrating an exemplary configuration of a camera system according to a second exemplary embodiment of the present invention.

### [Description of Embodiments]

A first exemplary embodiment of the present invention will be described with reference to the drawings.

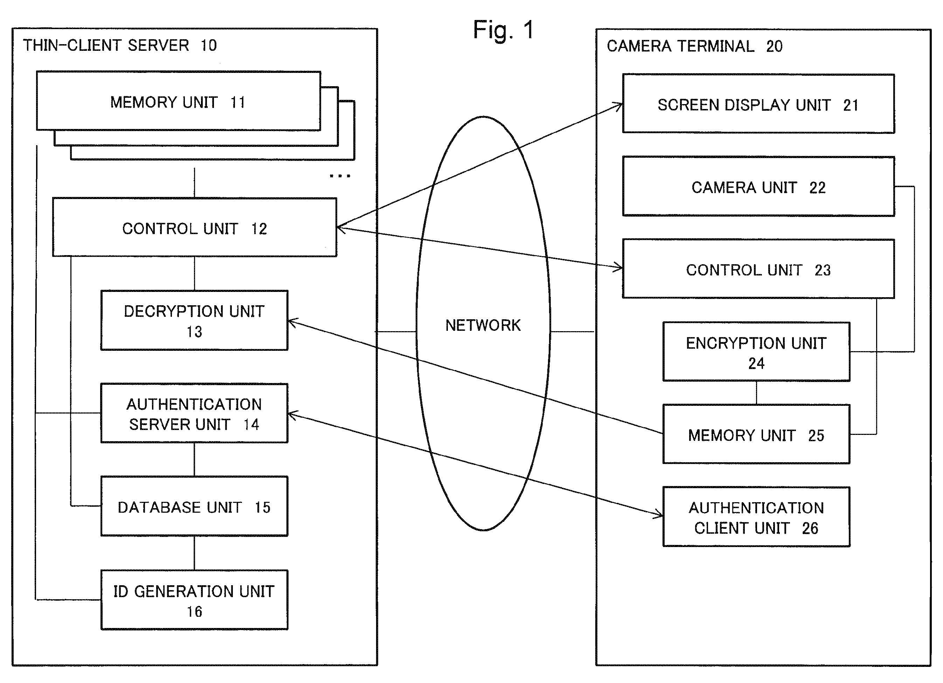

Fig. 1 illustrates an exemplary configuration of a camera system according to the present exemplary embodiment. The camera system is a screen--transfer-type thin-client system and includes a thin-client server 10 and a camera terminal 20. The thin-client server 10 and the camera terminal 20 are interconnected over a network. The camera terminal 20 is a client terminal of the thin-client server 10.

The thin-client server 10 includes a memory unit 11, a control unit 12, a decryption unit 13, an authentication server unit 14, a database unit 15, and an identification (ID) generation unit 16.

The camera terminal 20 includes a screen display unit 21, a camera unit 22, a control unit 23, an encryption unit 24, a memory unit 25, and an authentication client unit 26.

Each unit of the thin-client server 10 will be described.

The memory unit 11 includes a plurality of memory areas, each of which stores photograph data.

The control unit 12 includes an application program including a displaying function of photograph data, and performs search of database, control of the decryption unit and the memory unit, and the like.

The decryption unit 13 decrypts encrypted photograph data.

The authentication server unit 14 performs authentication of a camera terminal user, allocation of memory areas, assignment of ID to the camera terminal, and the like.

The database unit 15 registers a user name, a password, an ID, an identifier of memory area and the like.

The ID generation unit 16 generates an ID.

Each unit of the camera terminal 20 will be described.

The screen display unit 21 displays photograph data.

The camera unit 22 includes physical camera functions, with which a photograph is taken by a user, and generates photograph data.

The control unit 23 transmits encrypted photograph data to the thin-client server.

The control unit 23 performs photograph display request to the thin-client server.

The encryption unit 24 encrypts photograph data.

The memory unit 25 stores photograph data and an ID.

The authentication client unit 26 performs authentication request to the thin-client server.

Next, an operation of the camera system according to the present exemplary embodiment will be described with reference to Figs. 1 to 3.

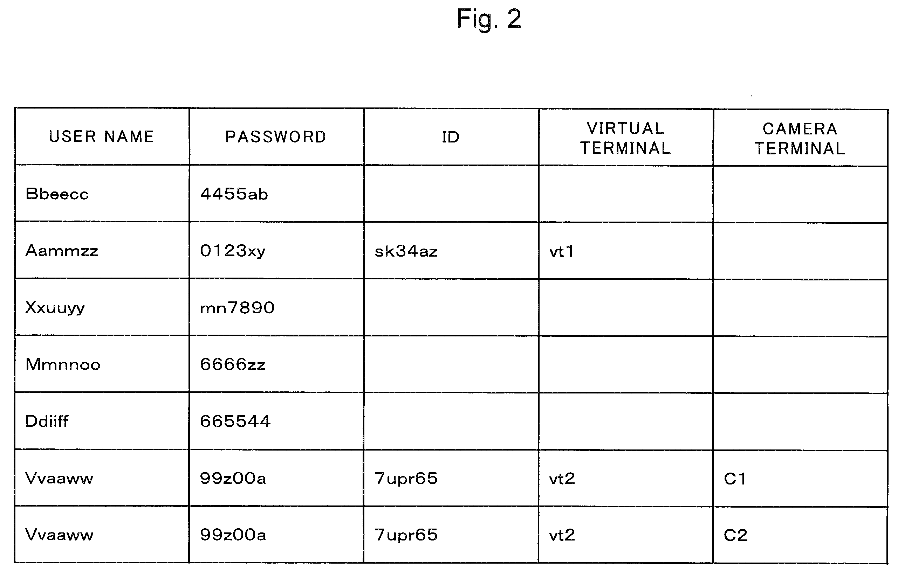

It is supposed that the user name and the password of a user who uses the camera terminal are registered in the database unit 15 in the thin-client server 10 in advance. Fig. 2 illustrates a conceptual example of the database unit 15. In Fig. 2, the user name, the password, the ID, the identifier of the memory area and the like are registered in association with one another. Note that the user name and the password are registered in advance whereas the ID and the identifier of memory area and the like are registered in response to the authentication request (as will be described in detail later).

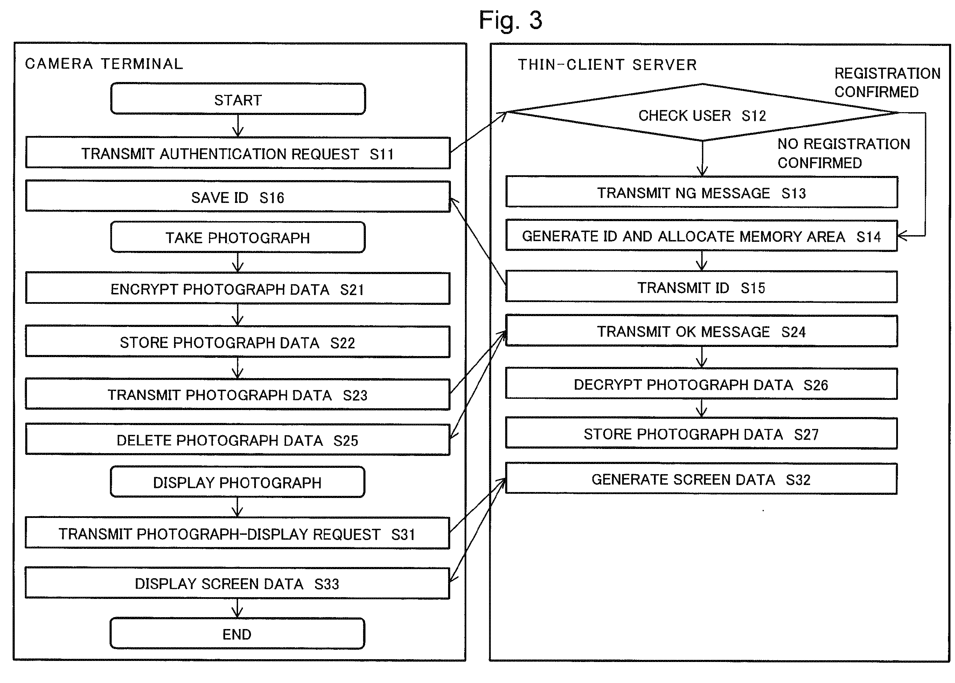

First, an operation for assigning a user ID will be described with reference to the flowchart of Fig. 3.

A user name and a password are input by a user through a given interface (not depicted) to the camera terminal 20. The input user name and the password are input into the authentication client unit 26 and are transmitted as an authentication request from a transmission unit (not depicted) to the thin-client server 10 over the network (S11). The authentication request is made by using the hypertext transfer protocol (http), for example. The thin-client server 10 which has received the authentication request at a receiving unit (not depicted) checks, by the authentication server unit 14, whether or not the user name and the password in the authentication request are registered in the database unit 15 (S12). If the user name and the password are not registered (No registration confirmed at S12), a message indicating that the user name and the password are not registered, for example, "No Good", is transmitted from a transmission unit (not depicted) to the camera terminal 20 over the network as a response to the authentication request (S13 (end of the process); a message such as "Not registered" or the like is displayed on the camera terminal). If registered (Registration confirmed at S12), an ID of, for example, 32 byte random character string is generated by the ID generation unit 16 and one of the memory areas in the memory unit 11 is allocated to the user by the authentication server unit 14. The generated ID and the identifier of the allocated memory area are associated with the user name and the password and registered in the database unit 15 (S14). For example, suppose that a user name "Aammzz" and a password "0123xy" of a certain user are registered in the database unit 15 in advance. When the user transmits an authentication request from the camera terminal 20, the database unit 15 is searched by the authentication server unit 14. Then, if the user name "Aammzz" and the password "0123xy" are registered, an ID is generated and a memory area is allocated. Suppose that the generated ID is "sk34az" and the identifier of the allocated memory area is "vt1", the contents regarding the user in the database unit 15 are as illustrated in Fig. 2. The ID generated by the authentication server unit 14 is then transmitted from the transmission unit to the camera terminal 20 over the network as a response to the authentication request (S15). The ID which is received at a receiving unit (not depicted) of the camera terminal 20 is stored in the memory unit 25 (S16). This allows the thin-client server 10 to identify the user of the camera terminal 20 connected to the thin-client server 10 based on the user name and the password, or the ID.

Note that the use of the camera terminals 20 by users may be administrated by using the user names and the passwords on a user-by-user basis. Alternatively, in a case that the camera terminal 20 stores an ID assigned on the authentication request by one user and the same camera terminal 20 receives another ID in response to the authentication request by another user, the IDs may be administrated by using the user names and the passwords on a user-by-user basis in the camera terminal. Furthermore, if a user to whom an ID has been assigned on the authentication request from a camera terminal receives another ID assigned on the authentication request from another camera terminal, the IDs may be administrated on a camera terminal-by-camera terminal basis in the database unit 15.

Next, an operation for storing photograph data into a memory area will be described with reference to the flowchart of Fig. 3.

When a photograph is taken with a camera unit 22 by a user whose user name and password have been input into the camera terminal 20, the data of the photograph taken is encrypted by the encryption unit 24 (S21). The format of photograph data is the joint photographic experts group (JPEG) or the raw image format (RAW), for example. The advanced encryption standard (AES), for example, is a method used for the encryption. The stored ID is added to the encrypted photograph data to be stored in the memory unit 25 (S22). The method of adding an ID includes setting a file name of the encrypted photograph data to the ID, for example. Note that the photograph data before encryption is not stored in a storage. The control unit 23 connects the camera terminal 20 to the thin-client server 10 if not connected yet, and transmits the encrypted photograph data stored in the memory unit 25 from the transmission unit to the thin-client server 10 over the network (S23). The data transmission may use http, for example. In addition, the photograph data may be compressed before the transmission. The thin-client server 10 which has received the encrypted photograph data at the receiving unit transmits by the control unit 12 a message indicating that the photograph data has been received, for example, "OK" from the transmission unit to the camera terminal 20 over the network as a response to the data transmission (S24). The camera terminal 20 which has received the response to the data transmission at its receiving unit deletes the encrypted photograph data from the memory unit 25 (S25). The encrypted photograph data received at the receiving unit of the thin-client server 10 is decrypted by the decryption unit 13 (S26). The control unit 12 searches the database 15 for the ID added to the received photograph data and stores the decrypted photograph data in the memory area associated with the ID (S27).

Note that the encryption of photograph data is not indispensable if the data of a photograph taken is stored in the thin-client server 10 immediately after taking the photograph or if there is no leakage of the data on the network over which the data is transmitted or the like. However, if the data of the photograph taken cannot be stored in the server 10 and is temporally stored in the camera terminal 20 or if the data of the photograph taken may be leaked on the network over which the data is transmitted or the like, the encryption can reduce a possibility of leakage of the photograph data. Furthermore, the photograph data is stored into the memory unit 25 in the case that the data of a photograph taken cannot be stored in the thin-client server 10, such as a case that the camera terminal 20 is not connected to the thin-client server 10 or the like, as described above. Therefore, when the camera terminal 20 is connected to the thin-client server 10, the photograph data and the ID may be transmitted from the camera terminal 20 without temporally storing the photograph data in the memory unit 25. In that case, the possibility of leakage of the photograph data may be reduced by not storing the photograph data in the camera terminal 20.

Next, an operation for displaying a photograph will be described with reference to the flowchart of Fig. 3.

When a photograph display operation is performed on a given user interface (not depicted) of the camera terminal 20 by a user whose user name and password have been input into the camera terminal 20, the control unit 23 transmits a photograph display request from the transmission unit to the thin-client server 10 over the network (S31). The thin-client server 10 identifies the user of the camera terminal 20 connected thereto based on the user name and the password or the ID, as described above. Accordingly, this photograph display request can indicated the user name and the password or the ID unique to the user performing an operation of the request. The thin-client server 10 which has received the photograph display request at the receiving unit generates, by the control unit 12, screen data with an application program or the like from the photograph data stored in the memory area associated with the ID based on the user name and the password or the ID (S32). The generated screen data is captured, processed by compression encoding, packetized, and then transmitted from the transmission unit to the camera terminal 20 over the network. Then, the screen data is displayed on the screen display unit 21 in the camera terminal 20 (S33). The screen data in the camera terminal 20 exists in a memory (not depicted) of the screen display unit 21 and is not stored in the storage or the like.

Note that alternatively, it is possible to transmit a drawing command for screen drawing from the thin-client server 10 to the camera terminal 20, draw the screen by the drawing command in the camera terminal 20, and display the screen on the screen display unit 21, instead of transmitting the screen data from the thin-client server 10 to the camera terminal 20.

In this way, the data of a photograph taken with the camera terminal is transmitted to the server after the photographing and stored in the memory area associated with the ID unique to the user of the camera terminal in the server. When the display operation of photograph data is performed by a user in the camera terminal, the screen data is generated from the photograph data in the memory area associated with the ID unique to the user, and the generated screen data is displayed without being stored in the camera terminal.

Thereby, it is capable of straightforwardly displaying the data of a photograph taken on the camera terminal and reducing a possibility that the data of a photograph taken be leaked due to loss of the camera terminal or the like.

Next, a second exemplary embodiment of the present invention will be described with reference to the drawings.

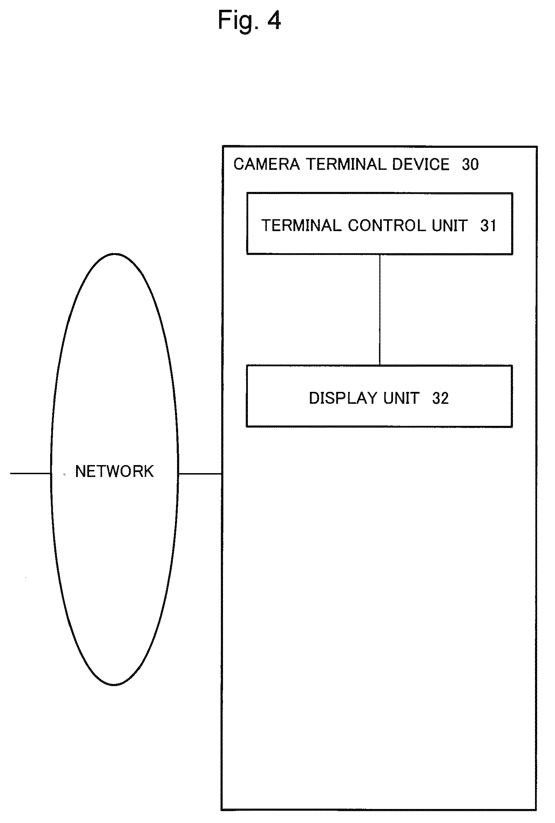

Fig. 4 illustrates an exemplary configuration of a camera terminal device in the present exemplary embodiment.

The camera terminal device 30 is a screen-transfer-type thin-client terminal and includes a terminal control unit 31 and a display unit 32.

Each unit of the camera terminal device 30 will be described.

The terminal control unit 31 transmits photograph data and a prescribed identifier and also transmits a photograph display request signal including the prescribed identifier.

The display unit 32 displays photograph data.

Next, an operation of the camera terminal device in the present exemplary embodiment will be described with reference to Fig. 4.

First, an operation for storing photograph data will be described.

When a photograph is taken by a user with the camera terminal device 30, the data of the photograph taken and a prescribed identifier are transmitted by the terminal control unit 31 to a thin-client server device over a network. (The photograph data is stored in the memory area associated with the prescribed identifier in the thin-client server device).

Next, an operation for displaying a photograph will be described.

When a photograph display operation is performed by a user in the camera terminal device 30, a photograph display request signal is transmitted with the prescribed identifier in a recognizable state by the terminal control unit 31 to the thin-client server device over the network. The photograph data transmitted from the thin-client server device over the network in response to the photograph display request signal is displayed on the display unit 32. Note that the photograph data in the camera terminal device 30 exists in a memory (not depicted) of the display unit 32 and not stored in a storage or the like.

As described above, the data of a photograph taken with the camera terminal is transmitted to the server after the photographing, (and stored in the memory area for the camera terminal user in the server.) When the operation for displaying the photograph data is performed in the camera terminal by the user, the photograph data transmitted from the server is displayed without being stored in the camera terminal.

Thereby, it is capable of straightforwardly displaying the data of a photograph taken on the camera terminal and reducing a possibility that the data of a photograph taken be leaked due to loss of the camera terminal or the like.

The whole or part of the exemplary embodiments disclosed above can be described as, but not limited to, the following supplementary notes. (Supplementary Note 1) A camera terminal device including a terminal control means for transmitting data of a photograph with a prescribed identifier or a photograph display request signal with the prescribed identifier in recognizable state, the photograph being taken with its own camera terminal device, the signal being input, and a display means for displaying photograph data received in response to the photograph display request signal without storing in the device.
(Supplementary Note 2) A thin-client server device including a memory means for storing photograph data received with a prescribed identifier corresponding to a camera terminal device into a memory area associated with the prescribed identifier, and a server control means for transmitting the photograph data stored in the memory area associated with an identifier corresponding to a photograph display request signal that is received, the photograph data being transmitted in such a manner that the photograph data is displayable on the camera terminal device corresponding to the identifier.
(Supplementary Note 3) The camera terminal device according to supplementary note 1, wherein the terminal control means encrypts the photograph data to be transmitted.
(Supplementary Note 4) The thin-client server device according to supplementary note 2, wherein the server control means decrypts encrypted photograph data to be stored in the memory area.
(Supplementary Note 5) The camera terminal device according to supplementary note 3 further including a memory means for storing encrypted photograph data to be transmitted, wherein the terminal control means further, when the encrypted photograph data is to be transmitted and the device is not connected to a thin-client server device, connects the device to the thin-client server device, adds an identifier to the encrypted photograph data stored in the memory means and transmits the encrypted photograph data with the identifier, and, when a reception acknowledgement signal is received, deletes the encrypted photograph data from the memory means.
(Supplementary Note 6) The thin-client server device according to supplementary note 4, wherein the server control means transmits a reception acknowledgement signal when the photograph data with the identifier is received.
(Supplementary Note 7) A camera system including the camera terminal device according to any one of supplementary notes 1, 3 and 5, and the thin-client server device according to any one of supplementary notes 2, 4 and 6, wherein the camera terminal device and the thin-client server device are connected over a network for transmission and reception.
(Supplementary Note 8) A control method for a camera terminal device including transmitting data of a photograph with a prescribed identifier or a photograph display request signal with the prescribed identifier in recognizable state, the photograph being taken, the signal being input, and displaying photograph data received in response to the photograph display request signal without storing.
(Supplementary Note 9) A control method for a thin-client server device including storing photograph data received with a prescribed identifier corresponding to a camera terminal device into a memory area associated with the prescribed identifier, and transmitting the photograph data stored in the memory area associated with an identifier corresponding to a photograph display request signal that is received, the photograph data being transmitted in such a manner that the photograph data is displayable on the camera terminal device corresponding to the identifier.
(Supplementary Note 10) The control method for a camera terminal device according to supplementary note 8, wherein the photograph data to be transmitted is encrypted.
(Supplementary Note 11) The control method for a thin-client server device according to supplementary note 9, wherein encrypted photograph data to be stored in the memory area is decrypted.
(Supplementary Note 12) The control method for a camera terminal device according to supplementary note 10 further including storing encrypted photograph data to be transmitted in a memory means, wherein, when the encrypted photograph data is to be transmitted and a camera terminal device is not connected to a thin-client server device, the camera terminal device and the thin-client server device are connected, an identifier is added to the encrypted photograph data stored in the memory means, and the encrypted photograph data with the identifier is transmitted, and, when a reception acknowledgement signal is received, the encrypted photograph data is deleted from the memory means.
(Supplementary Note 13) The control method for a thin-client server device according to supplementary note 11, wherein a reception acknowledgement signal is transmitted when the photograph data with the identifier is received.
(Supplementary Note 14) A control method for a camera system including the control method for a camera terminal device according to any one of supplementary notes 8, 10 and 12, and the control method for a thin-client server device according to any one of supplementary notes 9, 11 and 13, wherein transmission and reception in the control method for a camera terminal device respectively corresponds to reception and transmission in the the control method for a thin-client server device.
(Supplementary Note 15) A program for a camera terminal device causing a processor included in a camera terminal device to execute a terminal control process for transmitting data of a photograph with a prescribed identifier or a photograph display request signal with the prescribed identifier in recognizable state, the photograph being taken, the signal being input, and a display process for displaying photograph data received in response to the photograph display request signal without storing.
(Supplementary Note 16) A program for a thin-client server device causing a processor included in a thin-client server device to execute a memory process for storing photograph data received with a prescribed identifier corresponding to a camera terminal device into a memory area associated with the prescribed identifier, and a server control process for transmitting the photograph data stored in the memory area associated with an identifier corresponding to a photograph display request signal that is received, the photograph data being transmitted in such a manner that the photograph data is displayable on the camera terminal device corresponding to the identifier.
(Supplementary Note 17) The program for a camera terminal device according to supplementary note 15, wherein the terminal control process encrypts the photograph data to be transmitted.
(Supplementary Note 18) The program for a thin-client server device according to supplementary note 16, wherein the server control process decrypts encrypted photograph data to be stored in the memory area.
(Supplementary Note 19) The program for a camera terminal device according to supplementary note 17 further including a memory process for storing encrypted photograph data to be transmitted, wherein the terminal control process further, when the encrypted photograph data is to be transmitted and the device is not connected to a thin-client server device, connects the device to the thin-client server device, adds an identifier to the encrypted photograph data stored in the memory process and transmits the encrypted photograph data with the identifier, and, when a reception acknowledgement signal is received, deletes the encrypted photograph data stored in the memory process.
(Supplementary Note 20) The program for a thin-client server device according to supplementary note 18, wherein the server control process transmits a reception acknowledgement signal when the photograph data with the identifier is received.

While the invention has been particularly shown and described with reference to exemplary embodiments thereof, the invention is not limited to those embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2013-260706, filed on December 18, 2013, the disclosure of which is incorporated herein in its entirety by reference.

### [Industrial Applicability]

The present invention is available for a camera terminal device, a thin-client server device, a camera system, and a control method for the same.

### [Reference Signs List]

- 10: Thin-client server
- 11: Memory unit
- 12: Control unit
- 13: Decryption unit
- 14: Authentication server unit
- 15: Database unit
- 16: ID generation unit
- 20: Camera terminal
- 21: Screen display unit
- 22: Camera unit
- 23: Control unit
- 24: Encryption unit
- 25: Memory unit
- 26: Authentication client unit
- 30: Camera terminal device
- 31: Terminal control unit
- 32: Display unit

## Claims

1. A camera terminal device comprising:
a terminal control means for transmitting data of a photograph with a prescribed identifier or a photograph display request signal with the prescribed identifier in recognizable state, the photograph being taken with its own camera terminal device, the signal being input; and
a display means for displaying photograph data received in response to the photograph display request signal without storing in the device.

2. A thin-client server device comprising:
a memory means for storing photograph data received with a prescribed identifier corresponding to a camera terminal device into a memory area associated with the prescribed identifier; and
a server control means for transmitting the photograph data stored in the memory area associated with an identifier corresponding to a photograph display request signal that is received, the photograph data being transmitted in such a manner that the photograph data is displayable on the camera terminal device corresponding to the identifier.

3. The camera terminal device according to claim 1,
wherein the terminal control means encrypts the photograph data to be transmitted.

4. The thin-client server device according to claim 2,
wherein the server control means decrypts encrypted photograph data to be stored in the memory area.

5. The camera terminal device according to claim 3 further comprising:
a memory means for storing encrypted photograph data to be transmitted,
wherein the terminal control means further, when the encrypted photograph data is to be transmitted and the device is not connected to a thin-client server device, connects the device to the thin-client server device, adds an identifier to the encrypted photograph data stored in the memory means and transmits the encrypted photograph data with the identifier, and, when a reception acknowledgement signal is received, deletes the encrypted photograph data from the memory means.

6. The thin-client server device according to claim 4,
wherein the server control means transmits a reception acknowledgement signal when the photograph data with the identifier is received.

7. A camera system comprising:
the camera terminal device according to any one of claims 1, 3 and 5; and
the thin-client server device according to any one of claims 2, 4 and 6,
wherein the camera terminal device and the thin-client server device are connected over a network for transmission and reception.

8. A control method for a camera terminal device comprising:
transmitting data of a photograph with a prescribed identifier or a photograph display request signal with the prescribed identifier in recognizable state, the photograph being taken, the signal being input; and
displaying photograph data received in response to the photograph display request signal without storing.

9. A control method for a thin-client server device comprising:
storing photograph data received with a prescribed identifier corresponding to a camera terminal device into a memory area associated with the prescribed identifier; and
transmitting the photograph data stored in the memory area associated with an identifier corresponding to a photograph display request signal that is received, the photograph data being transmitted in such a manner that the photograph data is displayable on the camera terminal device corresponding to the identifier.
